Europäisches Patentamt

European Patent Office

Office européen des brevets

Publication number: **0 283 208**

**A1**

## EUROPEAN PATENT APPLICATION

Application number: **88302101.6**

Date of filing: **10.03.88**

Int. Cl.⁴ **B60R 9/04**

Priority: **11.03.87 AU 802/87**
**22.05.87 AU 73336/87**

Date of publication of application:
**21.09.88 Bulletin 88/38**

Designated Contracting States:
**AT BE CH DE ES FR GB IT LI NL SE**

Applicant: **HUBCO INDUSTRIES LIMITED**
**43-47 Vickerys Road**
**Christchurch(NZ)**

Inventor: **Hubbard, Peter Douglas**
**18, Allister Avenue**
**Christchurch(NZ)**

Representative: **Leale, Robin George et al**
**FRANK B. DEHN & CO. Imperial House 15-19**
**Kingsway**
**London WC2B 6UZ(GB)**

### Vehicle roof rack bracket.

A bracket 1 for supporting a roof bar 3 relative to a vehicle roof, the bracket 1 including a mounting leg the upper end 2 of which is shaped to have fitted therein a standard roof bar 3, the lower end 6 of the mounting leg having mounted relative thereto a foot 7 which is free to move relative to the leg, the mounting leg, also having mounted relative thereto a locking arm 11 associated with which is a means for moving the arm 11 relative to the mounting leg, the arrangement being such that, in use the position of the locking arm can be adjusted by the means to lock the locking arm relative to a roof bar 3 associated with the upper end 6 of the leg to thereby locate them together. The means for adjusting the position of locking arm 11 relative to the mounting leg can be a bolt 17 extending through a hole 18 in the leg and engaging with either a screw thread in the locking arm 11 or a nut supported relative to the locking arm such that movement of the bolt pivots the locking arm relative to the mounting leg.

Fig 1

## VEHICLE ROOF RACK BRACKET

The invention relates to vehicle roof racks and more particularly to a bracket for supporting a roof bar relative to a vehicle roof.

At present vehicles are built with or without a roof gutter and the brackets of existing roof rack systems do not normally allow the same bracket to be used on both types of vehicle. In addition it is now the practice to use standardised roof bars for which a variety of attachment fittings are available.

An object of the invention is therefore to provide an alternative bracket for fixing standard roof bars to vehicles with or without roof gutters.

Further objects and advantages of the invention will become apparent from the following description which is given by way of example only.

According to the present invention there is provided a bracket for supporting a roof bar relative to a vehicle roof, the bracket including a mounting leg the upper end of which is shaped to have fitted therein a standard roof bar, the lower end of the mounting leg having mounted relative thereto a foot which is free to move relative to the leg, the mounting leg also having mounted relative thereto a locking arm associated with which is a means for moving the arm relative to the mounting leg, the arrangement being such that, in use the position of the locking arm can be adjusted by the means to lock the locking arm relative to a roof bar associated with the upper end of the leg to thereby locate them together.

The means for adjusting the position of locking arm relative to the mounting leg can be a bolt extending through a hole in the leg and engaging with either a screw thread in the locking arm or a nut supported relative to the locking arm such that movement of the bolt pivots the locking arm relative to the mounting leg.

The means can lock the locking arm relative to the roof bar by wedging the upper end thereof against the surface of the roof bar.

The locking arm is biased by a spring against the surface of the roof bar so that a ledge on the upper end of the locking arm engages in one of a series of slots formed in the roof bar.

The means being usable to either lock the arm relative to the roof bar with the ledge engaged in one of the series of slots or to release the ledge from the slot to allow the mounting leg to move relative to the roof bar.

The foot can include a shaped slot in which a clamping bar is engaged to position and hold the foot relative to a vehicle roof gutter or vehicle door surround.

The clamping bar can be a length of stainless steel bar one end of which is shaped to interfit with the shaped slot in the foot and the other end of which is shaped to engage with the roof gutter or door surround with which it is used.

The clamping bar can be located relative to the foot by a tightening means associated with the foot, the tightening means being adapted to move the end of the bar relative to the foot to lock the free end of the clamping bar to the roof gutter or door surround.

Further aspects of the invention will become apparent from the following descriptions which are given by way of example only.

Examples of the invention will now be described with reference to the accompanying drawings in which:

Figure 1: shows a front view of a first example of bracket according to the invention shown with a roof bar engaged therewith;

Figure 2: shows a view in the direction of arrows A-A of the bracket shown in Figure 1;

Figure 3: shows a blank from which the first example of bracket shown in Figures 1 and 2 is folded;

Figure 4: shows a blank from which a first example of locking arm shown in Figures 1 and 2 is folded;

Figure 5: shows in section a foot, a clamping bar and tightening means of the type usable with the bracket shown in Figures 1 and 2;

Figure 6: shows a front view of a second example of bracket according to the invention;

Figure 7: shows a blank from which the second bracket shown in Figure 6 is folded;

Figure 8: shows a view in the direction of arrow B-B in Figure 6 of the second example of locking arm shown in Figure 6;

Figure 9: shows a view in the direction of arrow C-C in Figure 8 of the locking arm; and

Figure 10: shows a view from beneath of a construction of roof bar usable with the second example of bracket and locking arm shown in Figures 6 to 9.

The examples of the invention will be described with reference to the bracket according to the invention being designed to fit a vehicle without a roof gutter and for use with a rectangular section roof bar. It is however to be appreciated that with minor modifications the bracket can be used with different shapes of roof bar and with vehicles with a roof gutter.

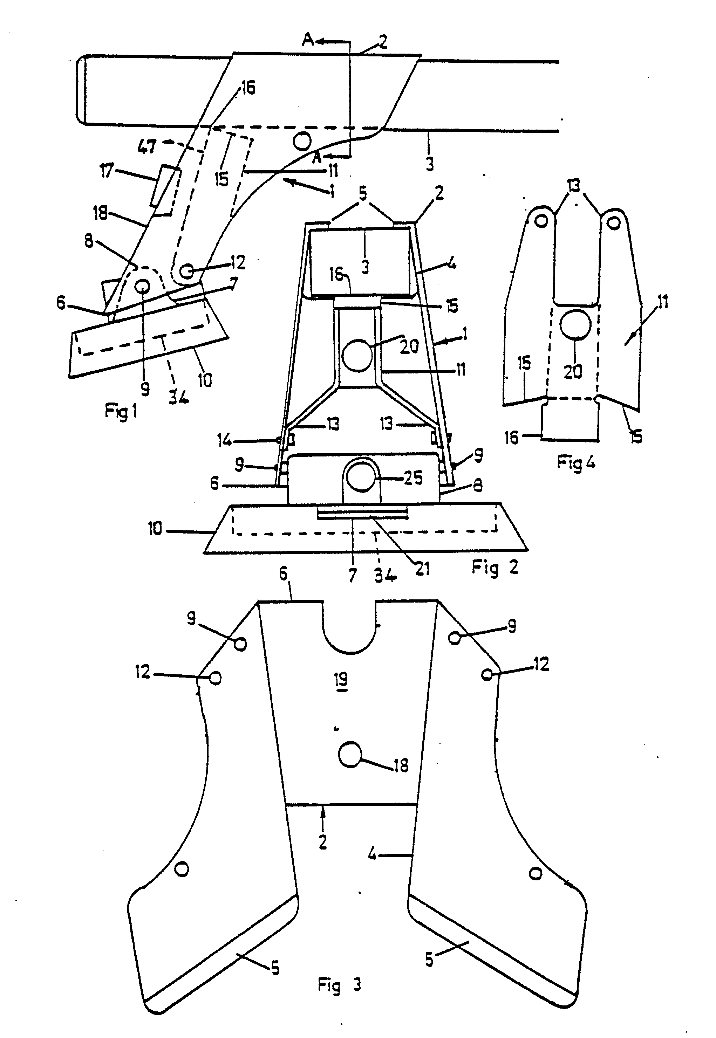

The first example of bracket described with reference to Figures 1 to 4 is generally indicated by arrow 1 and can be cast, fabricated or moulded from any suitable material to the shape shown.

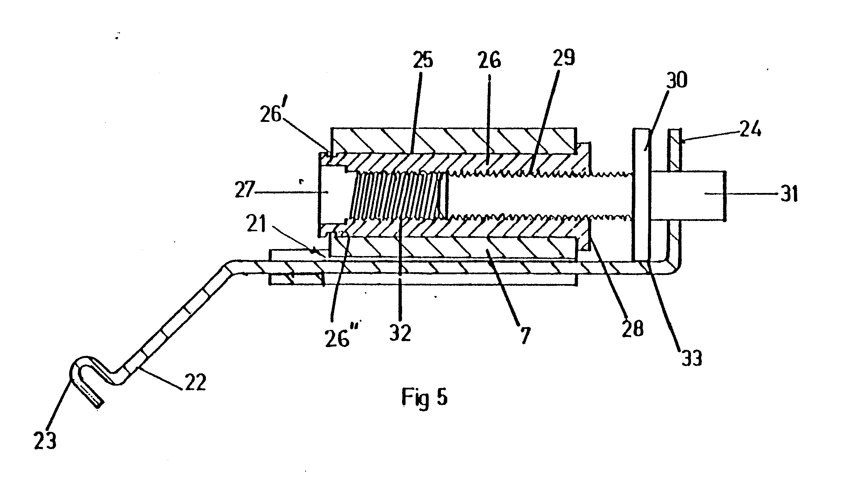

The bracket 1 is folded from a blank which is shown in Figure 3. The bracket 1 has an upper end 2 which is shaped to engage with a standard roof bar 3. The upper end 2 being folded to form a generally rectangular recess 4 (Figure 2) the upper part of which is incomplete between the lips 5 which are formed on either side of the upper end 2.

The other or lower end 6 of the bracket 1 has a foot 7 pivotally attached thereto. In the example the foot 7 has an upstand 8 with holes 9 for pins or rivets which support the lower end 6 of the bracket 1 on the foot 7. The foot 7 in the example is shaped to engage with a plastics or rubber pad 10 which has a recess in its upper surface which is complementary in shape with the bottom 34 of the foot 7. The pivotal movement of the foot 7 allows the base of the pad 10 to lie flat on top of the roof of a vehicle no matter what its contours are.

The bracket 1 is folded from a blank the shape of which is shown in Figure 3 and it has a locking arm 11 pivotally mounted relative thereto by providing a pair of holes 12 in the blank. When folded the holes 12 are on the front and back of the bracket 1. The locking arm 11 is in this example a pressed metal fitting the shape of a blank for which is shown in Figure 4. The arm 11 has legs 13 through which pins 14 extend to locate the arm 11 relative to the holes 12 in the bracket 1. The upper end 15 of the arm 11 has an abutment end 16. The arm 11 has associated therewith a means for moving the arm 11 which in this example causes the abutment to lock against the roof bar 3. The means is a bolt 17 which extends through a hole 18 in the side 19 of the bracket 1 to engage in a screw-thread 20 in the upper end 15 of arm 11. The movement of the bolt 17 pivots the arm 11 so that it locks or unlocks the abutment end 16 from engagement with the roof bar 3.

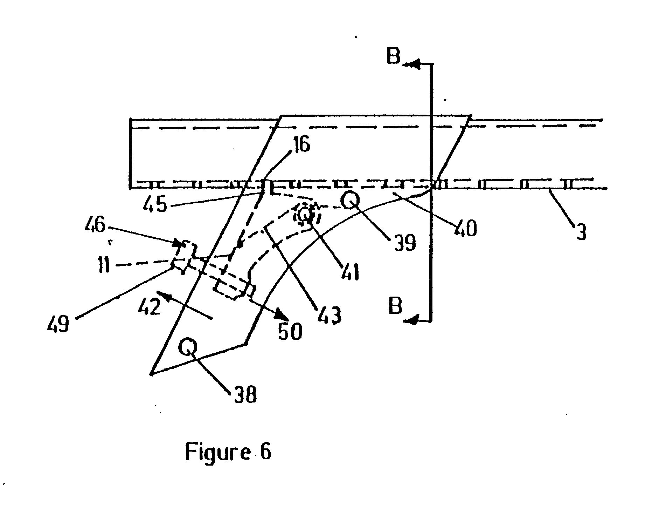

In the second example shown in Figures 6 to 10 similar parts of the barcket 1 are referenced by the same numerals as those used in the first example.

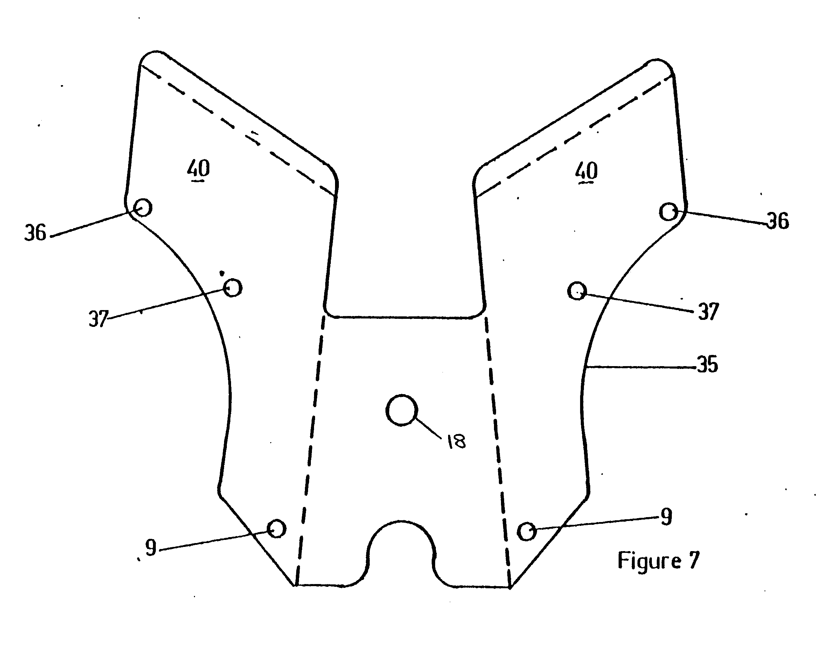

In this second example the bracket 1 is folded from blank 35 (Figure 7) which has three sets of holes 9, 36 and 37 respectively. The holes 9 are used to locate the bracket 1 to a foot 7 of the type shown in Figure 5 which is described below. The parts are held together by pins 38 inserted in holes in the upstand 8. The pins 38 are inserted and the bracket 1 is placed in position and the pins 38 are forced out into holes 9 and they are held out by the tightening means 26 which is fitted into the hole 25 in the foot 7.

The holes 36 are used for a pin or rivet 39 for holding and joining the sides 40 of the bracket 1 together.

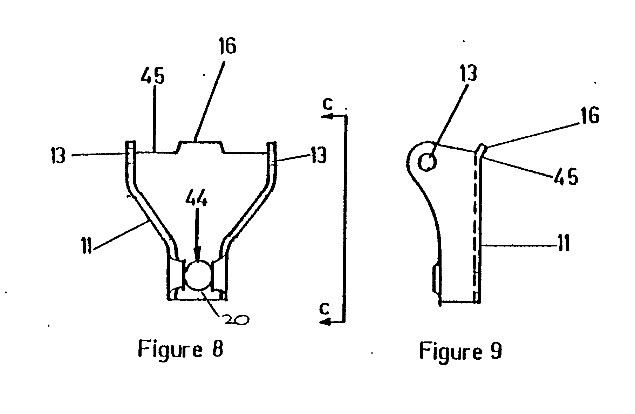

The holes 37 have a transverse pin 41 extending therethrough on which the locking arm 11 is mounted. The locking arm 11 is shown in Figures 8 and 9 and has a pair of holes 13 through which the pin 41 extends.

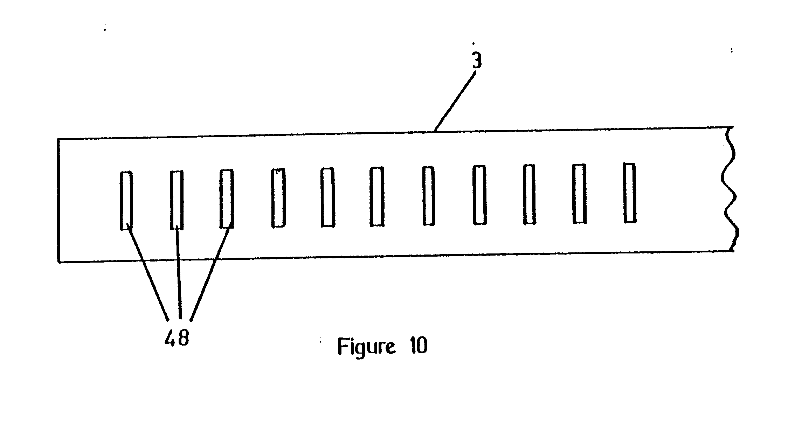

The pin 41 can also support a biasing means 43 which biases the locking arm 11 in the direction of arrow 42 so that an abutment 16 on its upper end contacts the lower surface of the roof bar 3 (shown from beneath in Figure 10).

The locking arm 11 in the example shown in Figures 8 and 9 is folded from a blank shaped to provide a region 44 in which a nut (not shown) is fitted. The opposite end 45 has an abutment or ledge 16 which in this example is angled (Figure 9) to form an engaging lug.

In this example a bolt 46 extends through hole 18 in the bracket 1 through the hole 20 in the locking arm 11 to engage with the nut (not shown) in the region 44. In use the bolt 46 Figure 6 has a two fold function as described hereinafter to move the arm 11 relative to the bracket 12 when it is released and to lock the arm, bracket and roof bar together when tightened.

Both the examples of bracket 1 described hereinbefore can include a similar foot 7 which has a shaped slot 21 in which a clamping bar 22 (shown in detail in Figure 5) can engage. The free end 23 of the clamping bar 22 is shaped to engage with a roof gutter (not shown) of a vehicle or to engage with a surround of a door of the vehicle. The clamping bar 22 can be located relative to the foot 7 by a shaped inner end 24 associated with which is a tightening means 26 used to locate them together and to move the clamping bar 22 relative to the foot 7. The foot 7 has a hole 25 in which the tightening means 26 (Figure 5) is fitted. The hole 25 has a step 26″ which clip fits in the circumferential groove 26′ of the tightening means 26. The end 27 of the tightening means 26 has a shaped hole for an Allen key so that the means 26 can be rotated relative to the foot 7. The other end 28 of the means 26 has fitted therein a threaded insert 29 with a square plate 30 and pin 31. The threaded insert 29 engaging in a threaded bore 32 in the means 26.

In use both examples of the bracket 1 with their clamping bars are positioned on the vehicle roof with the end of the roof bar 3 engaged in the upper end 2 of the bracket 1. In the first example the arm 11 is locked against the roof bar 3 by movement of the locking arm 11 when the bolt 17 is tightened. The abutment end 16 of the locking arm 11 being pivoted in the direction of arrow 47 about pins 14 to lock them together. The clamping bar 22 is then tightened to firmly lock the free end 23 to the door surround. The end 27 of the tightening means 26 being rotated and as the bottom 33 of the plate 30 is against the bar 22 it cannot rotate and the clamping bar moves relative to the foot 7 to fix it in position.

In the second example (Figures 6 to 10) the roof bar 3 (Figure 10) is used and this bar has a series of transverse slots 48 at spaced intervals on its lower surface. The roof bar 3 with brackets 1 fitted to either end is fitted to a vehicle with clamping bars 22 as described hereinbefore with respect to Figures 1 to 5. The brackets 1 can slide inward along the bar 3 as the abutment 16 is angled as shown in Figure 9 to slip out of the transverse slots 48 until they are located at the correct spacing to suit the width of the vehicle. When in the correct position the locking arm 11 can be locked by tightening bolt 46 to retain the abutment 16 in a desired slot 48.

If the roof rack is to be removed or adjusted or if the abutment 16 is to be unlocked the bolt 46 is released and its head 49 pushed in the direction of arrow 50. This movement releases the abutment 16 from the slot 48 to allow the bracket 1 to be moved freely on the roof bar 3. When the pressure on the head 49 is released the biasing means 43 returns the locking arm toward its initial position with the abutment 16 pressed against the lower surface of the roof bar 3.

Thus by this invention there is provided a bracket for supporting a roof bar relative to a vehicle roof.

It is to be clearly understood that there are no particular features of the foregoing specification, or of any claims appended hereto, which are at present regarded as being essential to the performance of the present invention, and that any one or more of such features or combinations thereof may therefore be included in, added to, omitted from or deleted from any of such claims if and when amended during the prosecution of this application or in the filing or prosecution of any divisional application based thereon. Furthermore the manner in which any of such features of the specification or claims are described or defined may be amended, broadened or otherwise modified in any manner which falls within the knowledge of a person skilled in the relevant art, for example so as to encompass, either implicitly or explicitly, equivalents or generalisations thereof.

## Claims

1. A bracket 1 for supporting a roof bar 3 relative to a vehicle roof, the bracket 1 including a mounting leg the upper end 2 of which is shaped to have fitted therein a standard roof bar 3, the lower end 6 of the mounting leg having mounted relative thereto a foot 7 which is free to move relative to the leg, the mounting leg also having mounted relative thereto a locking arm 11 associated with which is a means for moving the arm 11 relative to the mounting leg, the arrangement being such that, in use the position of the locking arm 11 can be adjusted by the means to lock the locking arm 11 relative to a roof bar 3 associated with the upper end 2 of the leg to thereby locate them together.

2. A bracket as claimed in claim 1 wherein the means for adjusting the position of locking arm 11 relative to the mounting leg can be a bolt 17 extending through a hole 18 in the leg and engaging with either a screw thread in the locking arm 11 or a nut supported relative to the locking arm such that movement of the bolt 17 pivots the locking arm 11 relative to the mounting leg.

3. A bracket as claimed in claim 2 wherein the means locks the locking arm 11 relative to the roof bar 3 by wedging the upper end 16 thereof against the surface of the roof bar 3.

4. A bracket as claimed in claim 2 wherein the locking arm 11 is biased by a spring against the surface of the roof bar so that a ledge 16 on the upper end of the locking arm 11 engages in one of a series of slots 48 formed in the roof bar 3.

5. A bracket as claimed in claim 4 wherein the means is usable to either lock the arm 11 relative to the roof bar 3 with the ledge 16 engaged in one of the series of slots 48 or to release the ledge 16 from the slot 48 to allow the mounting leg to move relative to the roof bar 3.

6. A bracket as claimed in any one of the preceding claims wherein the foot 7 includes a shaped slot 21 in which a clamping bar 22 is engaged to position and hold the foot 7 relative to a vehicle roof gutter or vehicle door surround.

7. A bracket as claimed in claim 6 wherein the clamping bar 22 is a length of stainless steel one end 24 of which is shaped to interfit with the shaped slot in the foot and the other end 23 of which is shaped to engage with the roof gutter or door surround with which it is used.

8. A bracket as claimed in claim 6 or claim 7 wherein the clamping bar 22 is located relative to the foot 7 by a tightening means 25 associated with the foot 7, the tightening means being adapted to move the end of the bar 22 relative to the foot 7 to lock the free end 23 of the clamping bar 22 to the roof gutter or door surround.

Fig 1

Fig 2

Fig 3

Fig 4

0 283 208

Fig 5

Figure 6

0 283 208

Figure 7

0 283 208

0 283 208

Figure 8

Figure 9

Figure 10

0 283 208

# EUROPEAN SEARCH REPORT

European Patent Office

Application Number

EP 88 30 2101

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 559 110 (IMPEX DIFFUSION) * Page 2, line 33 - page 4, line 31; figures 1-3 * | 1 | B 60 R 9/04 |
| A | | 2 | |
| Y | GB-A-2 148 378 (DIEGO GEMESIO) * Claim 1; figure 1 * | 1 | |
| A | | 3 | |
| A | AT-B- 370 044 (HOLZRICHTER) * Page 3, lines 26-33; figures 1-3 * | 1,4,5 | |
| A | FR-A- 836 940 (SELECTION) * Page 1, lines 30-58; figures 1,2 * | 1,6-8 | |
| A . | EP-A-0 100 760 (EKLUND) * Page 3, line 19 - page 4, line 11; figures 1-4 * | | |
| P,X | GB-A-2 179 901 (WILLIS THULIN) * Claim 1; figures 1-9 * | 1 | |
| P,A | | 2-8 | TECHNICAL FIELDS SEARCHED (Int. Cl.4) B 60 R |

The present search report has been drawn up for all claims

| Place of search | Date of completion of the search | Examiner |
|---|---|---|
| THE HAGUE | 17-06-1988 | MAUSSER,T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)